# EUROPEAN PATENT APPLICATION

(11) **EP 4 734 001 A1**
(43) Date of publication of application: **29.04.2026**
(21) Application number: 25210080.5
(22) Date of filing: 21.10.2025
(51) Int. Cl.: G06N 3/063, G06N 3/082

(54) **SYSTEM AND METHOD SPARSE VECTOR-QUANTIZED DEPP NEURAL NETWORKS**

(30) Priority: 23.10.2024 US 202418924101
(71) Applicant: Robert Bosch GmbH, 70442 Stuttgart (DE)
(72) Inventor: Norouzzadeh, Arash, Pittsburgh, PA, 15209 (US); Condessa, Filipe Cabrita, Pittsburgh, PA, 15207 (US)
(74) Representative: Isarpatent

(57) **Abstract**

A method for generating vector-quantized deep neural networks includes receiving a training dataset that includes one or more image, text information, sound information, training a neural model with the training dataset to adjust one or more parameters associated with one or more deep neural network layers, segmenting the one or more parameters associated with each of the one or more deep neural network layers into one or more segments based on a type and a size of each of the one or more deep neural network layers, generating one or more fixed codebook, wherein the fixed codebook include a predetermined number of codewords, replacing each of the one or more segments with one of the codewords, and in response to replacing the one or more segments with one of the codewords, outputting a trained neural model that utilizes the one or more fixed codebooks.

## Description

### TECHNICAL FIELD

The present disclosure relates to training of a deep neural network to create a vector quantized deep neural network.

### BACKGROUND

Deep neural networks have proven to be remarkably powerful tools for various tasks, ranging from image and speech recognition to natural language processing. However, these networks often come with a significant challenge: a vast number of parameters. Deep neural networks consist of millions to even multiple billions of learnable parameters, making them computationally demanding and resource-intensive to train and deploy.

### SUMMARY

A first embodiment discloses, a method for generating vector-quantized deep neural networks includes receiving a training dataset that includes one or more image, text information, sound information, training a neural model with the training dataset to adjust one or more parameters associated with one or more deep neural network layers, segmenting the one or more parameters associated with each of the one or more deep neural network layers into one or more segments based on a type and a size of each of the one or more deep neural network layers, generating one or more fixed codebook, wherein the fixed codebook include a predetermined number of codewords, replacing each of the one or more segments with one of the codewords, and in response to replacing the one or more segments with one of the codewords, outputting a trained neural model that utilizes the one or more fixed codebooks.

A second embodiment discloses a device for generating vector-quantized deep neural networks comprising one or more processors configured to receive a training dataset that includes one or more images, training a neural model with the training dataset to generate a first layer having weighted parameters, segmenting the one or more parameters associated with each of the one or more deep neural network layers one or more segments based on a type and a size of each of the one or more deep neural network layers, generating one or more fixed codebook, wherein the fixed codebook include a predetermined number of codewords, replacing each of the one or more segments with one of the codewords, and in response to replacing the one or more segments with one of the codewords, outputting a trained neural model that utilizes the one or more fixed codebooks.

A third embodiment discloses a system for generating vector-quantized deep neural networks comprising one or more processors configured to receive a training dataset that includes one or more images, training a neural model with the training dataset to generate a first layer having weighted parameters, segmenting the one or more parameters associated with each of the one or more deep neural network layers one or more segments based on a type and a size of each of the one or more deep neural network layers, generating one or more fixed codebook, wherein the fixed codebook include a predetermined number of codewords, replacing each of the one or more segments with one of the codewords, and in response to replacing the one or more segments with one of the codewords, outputting a trained neural model that utilizes the one or more fixed codebooks.

### BRIEF DESCRIPTION OF THE DRAWINGS

FIG. 1 shows a system for training a neural network, according to an embodiment.
FIG. 2 shows a computer-implemented method for training and utilizing a neural network, according to an embodiment.
FIG. 3 illustrates a flow chart of an example process 300 for generating a vector quantized machine learning model, according to an embodiment.
FIG. 4 illustrates is a flowchart of an example process 400 for generating a vector quantized machine learning model where multiple layers are replaced with a global codebook, according to an embodiment.
FIG. 5 depicts a schematic diagram of an interaction between a computer-controlled machine and a control system, according to an embodiment.
FIG. 6 depicts a schematic diagram of the control system of Figure 5 configured to control a vehicle, which may be a partially autonomous vehicle, a fully autonomous vehicle, a partially autonomous robot, or a fully autonomous robot, according to an embodiment.
FIG. 7 depicts a schematic diagram of the control system of Figure 5 configured to control a manufacturing machine, such as a punch cutter, a cutter or a gun drill, of a manufacturing system, such as part of a production line.
FIG. 8 depicts a schematic diagram of the control system of Figure 5 configured to control a power tool, such as a power drill or driver that has an at least partially autonomous mode.
FIG. 9 depicts a schematic diagram of the control system of Figure 5 configured to control an automated personal assistant.
FIG. 10 depicts a schematic diagram of the control system of Figure 5 configured to control a monitoring system, such as a control access system or a surveillance system.
FIG. 11 depicts a schematic diagram of the control system of Figure 5 configured to control an imaging system, for example an MRI apparatus, x-ray imaging apparatus or ultrasonic apparatus.
FIG. 12 illustrates an example vectorization of a quantized linear layer, according to an embodiment.

### DETAILED DESCRIPTION

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative bases for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical application. Various combinations and modifications of the features consistent with the teachings of this disclosure, however, could be desired for particular applications or implementations.

"A", "an", and "the" as used herein refers to both singular and plural referents unless the context clearly dictates otherwise. By way of example, "a processor" programmed to perform various functions refers to one processor programmed to perform each and every function, or more than one processor collectively programmed to perform each of the various functions.

In one embodiment, a system and method introduce an innovative approach to tackle the challenge of high parameter counts in deep neural networks. In one embodiment, the method may be employed the concept of vector quantization, which is a technique in data compression, to reduce the number of parameters used in deep neural networks. By implementing vector quantization, the system may aim to retain the critical information from the original parameters while significantly reducing their overall quantity.

This system and method may operate similarly to vector-quantized deep neural networks, with one difference being the use of a fixed codebook during training. This codebook exclusively contains only values 0s, 1s, and -1s, which effectively eliminates floating-point operations.

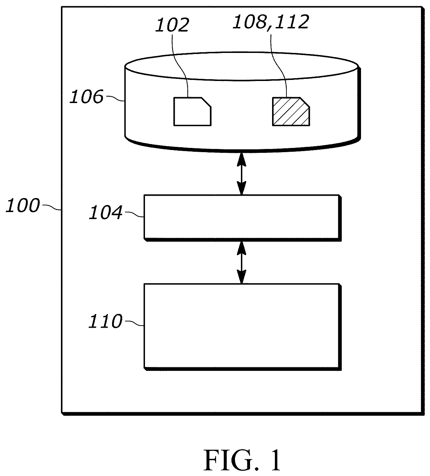

Reference is now made to the embodiments illustrated in the Figures, which can apply these teachings to a machine learning model or neural network. FIG. 1 shows a system 100 for training a neural network, e.g. a deep neural network. The system 100 may comprise an input interface for accessing training data 102 for the neural network, wherein training data may include text, audio, bitmap images, vector images, video, or any appropriate form data object. For example, as illustrated in FIG. 1, the input interface may be constituted by a data storage interface 104 which may access the training data 102 from a data storage 106. For example, the data storage interface 104 may be a memory interface or a persistent storage interface, e.g., a hard disk or an SSD interface, but also a personal, local or wide area network interface such as a Bluetooth, Zigbee or Wi-Fi interface or an ethernet or fiberoptic interface. The data storage 106 may be an internal data storage of the system 100, such as a hard drive or SSD, but also an external data storage, e.g., a network-accessible data storage.

In some embodiments, the data storage 106 may further comprise a data representation 108 of an untrained version of the neural network which may be accessed by the system 100 from the data storage 106. It will be appreciated, however, that the training data 102 and the data representation 108 of the untrained neural network may also each be accessed from a different data storage, e.g., via a different subsystem of the data storage interface 104. Each subsystem may be of a type as is described above for the data storage interface 104. In other embodiments, the data representation 108 of the untrained neural network may be internally generated by the system 100 on the basis of design parameters for the neural network, and therefore may not explicitly be stored on the data storage 106. The system 100 may further comprise a processor subsystem 110 which may be configured to, during operation of the system 100, provide an iterative function as a substitute for a stack of layers of the neural network to be trained. Here, respective layers of the stack of layers being substituted may have mutually shared weights and may receive as input for an output of a previous layer, or for a first layer of the stack of layers, an initial activation, and a part of the input of the stack of layers. The processor subsystem 110 may be further configured to iteratively train the neural network using the training data 102. Here, an iteration of the training by the processor subsystem 110 may comprise a forward propagation part and a backward propagation part. The processor subsystem 110 may be configured to perform the forward propagation part by, amongst other operations defining the forward propagation part which may be performed, determining an equilibrium point of the iterative function at which the iterative function converges to a fixed point, wherein determining the equilibrium point comprises using a numerical root-finding algorithm to find a root solution for the iterative function minus its input, and by providing the equilibrium point as a substitute for an output of the stack of layers in the neural network. The system 100 may further comprise an output interface for outputting a data representation 112 of the trained neural network, this data may also be referred to as trained model data 112. For example, as also illustrated in FIG. 1, the output interface may be constituted by the data storage interface 104, with said interface being in these embodiments an input/output ('IO') interface, via which the trained model data 112 may be stored in the data storage 106. For example, the data representation 108 defining the 'untrained' neural network may during or after the training be replaced, at least in part by the data representation 112 of the trained neural network, in that the parameters of the neural network, such as weights, hyperparameters and other types of parameters of neural networks, may be adapted to reflect the training on the training data 102. This is also illustrated in FIG. 1 by the reference numerals 108, 112 referring to the same data record on the data storage 106. In other embodiments, the data representation 112 may be stored separately from the data representation 108 defining the 'untrained' neural network. In some embodiments, the output interface may be separate from the data storage interface 104, but may in general be of a type as described above for the data storage interface 104.

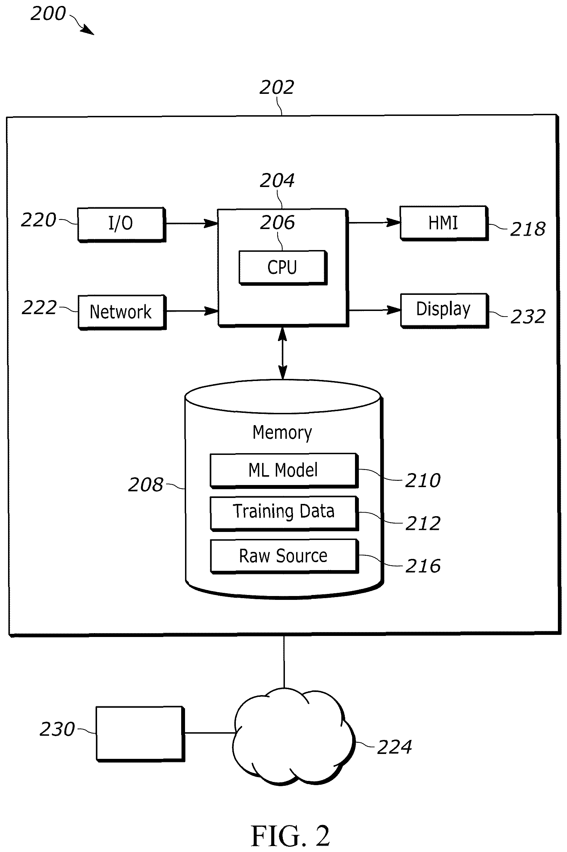

The structure of the system 100 is one example of a system that may be utilized to train the deep neural model described herein. Additional structure for operating and training the deep neural models is shown in FIG. 2.

FIG. 2 depicts a system 200 to implement the machine-learning models described herein, for example the deep neural machine-learning model described herein. The system 200 can be implemented to perform image quantization processes described herein. The system 200 may include at least one computing system 202. The computing system 202 may include at least one processor 204 that is operatively connected to a memory unit 208. The processor 204 may include one or more integrated circuits that implement the functionality of a central processing unit (CPU) 206. The CPU 206 may be a commercially available processing unit that implements an instruction set such as one of the x86, ARM, Power, or MIPS instruction set families. During operation, the CPU 206 may execute stored program instructions that are retrieved from the memory unit 208. The stored program instructions may include software that controls operation of the CPU 206 to perform the operation described herein. In some examples, the processor 204 may be a system on a chip (SoC) that integrates functionality of the CPU 206, the memory unit 208, a network interface, and input/output interfaces into a single integrated device. The computing system 202 may implement an operating system for managing various aspects of the operation. While one processor 204, one CPU 206, and one memory 208 is shown in FIG. 2, of course more than one of each can be utilized in an overall system.

The memory unit 208 may include volatile memory and non-volatile memory for storing instructions and data. The non-volatile memory may include solid-state memories, such as NAND flash memory, magnetic and optical storage media, or any other suitable data storage device that retains data when the computing system 202 is deactivated or loses electrical power. The volatile memory may include static and dynamic random-access memory (RAM) that stores program instructions and data. For example, the memory unit 208 may store a machine-learning model 210 or algorithm, a training dataset 212 for the machine-learning model 210, raw source dataset 216.

The computing system 202 may include a network interface device 222 that is configured to provide communication with external systems and devices. For example, the network interface device 222 may include a wired and/or wireless Ethernet interface as defined by Institute of Electrical and Electronics Engineers (IEEE) 802.11 family of standards. The network interface device 222 may include a cellular communication interface for communicating with a cellular network (e.g., 3G, 4G, 5G). The network interface device 222 may be further configured to provide a communication interface to an external network 224 or cloud.

The external network 224 may be referred to as the world-wide web or the Internet. The external network 224 may establish a standard communication protocol between computing devices. The external network 224 may allow information and data to be easily exchanged between computing devices and networks. One or more servers 230 may be in communication with the external network 224.

The computing system 202 may include an input/output (I/O) interface 220 that may be configured to provide digital and/or analog inputs and outputs. The I/O interface 220 is used to transfer information between internal storage and external input and/or output devices (e.g., HMI devices). The I/O 220 interface can includes associated circuity or BUS networks to transfer information to or between the processor(s) and storage. For example, the I/O interface 220 can include digital I/O logic lines which can be read or set by the processor(s), handshake lines to supervise data transfer via the I/O lines; timing and counting facilities, and other structure known to provide such functions. Examples of input devices include a keyboard, mouse, sensors, etc. Examples of output devices include monitors, printers, speakers, etc. The I/O interface 220 may include additional serial interfaces for communicating with external devices (e.g., Universal Serial Bus (USB) interface).

The computing system 202 may include a human-machine interface (HMI) device 218 that may include any device that enables the system 200 to receive control input. Examples of input devices may include human interface inputs such as keyboards, mice, touchscreens, voice input devices, and other similar devices. The computing system 202 may include a display device 232. The computing system 202 may include hardware and software for outputting graphics and text information to the display device 232. The display device 232 may include an electronic display screen, projector, printer or other suitable device for displaying information to a user or operator. The computing system 202 may be further configured to allow interaction with remote HMI and remote display devices via the network interface device 222.

The system 200 may be implemented using one or multiple computing systems. While the example depicts a single computing system 202 that implements all of the described features, it is intended that various features and functions may be separated and implemented by multiple computing units in communication with one another. The particular system architecture selected may depend on a variety of factors.

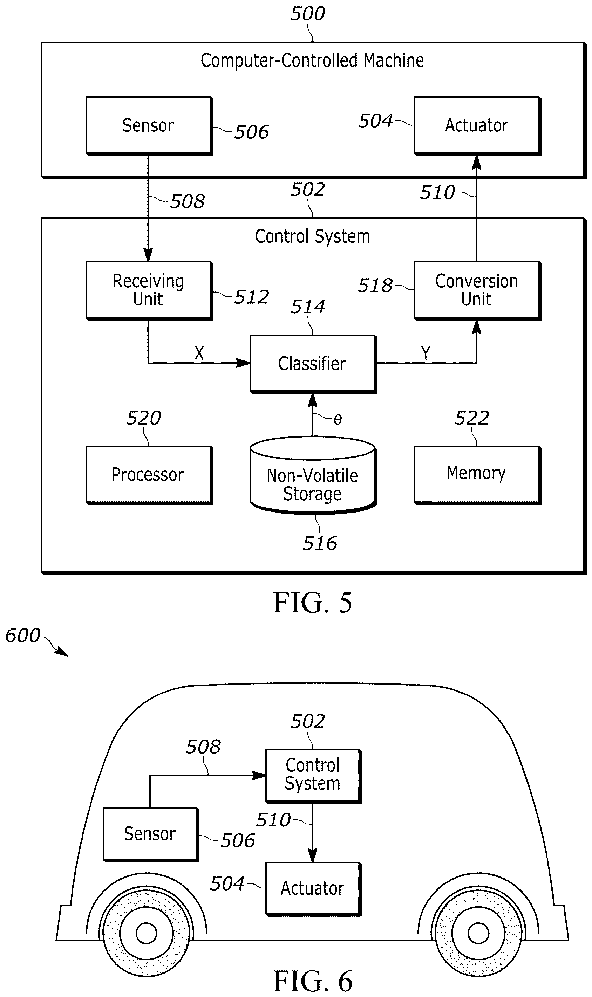

The system 200 may implement a machine-learning algorithm 210 that is configured to analyze the raw source dataset 216. The raw source dataset 216 may include raw or unprocessed sensor data that may be representative of an input dataset for a machine-learning system. The raw source dataset 216 may include video, video segments, images, text-based information, audio or human speech, time series data (e.g., a pressure sensor signal over time), and raw or partially processed sensor data (e.g., radar map of objects). Several different examples of inputs are shown and described with reference to FIGS. 5-11. In some examples, the machine-learning algorithm 210 may be a neural network algorithm (e.g., deep neural network) that is designed to perform a predetermined function. For example, the neural network algorithm may be configured in automotive applications to identify street signs or pedestrians in images. The machine-learning algorithm(s) 210 may include algorithms configured to operate the deep neural model machine-learning model described herein.

The computer system 200 may store a training dataset 212 for the machine-learning algorithm 210. The training dataset 212 may represent a set of previously constructed data for training the machine-learning algorithm 210. The training dataset 212 may be used by the machine-learning algorithm 210 to learn weighting factors associated with a neural network algorithm. The training dataset 212 may include a set of source data that has corresponding outcomes or results that the machine-learning algorithm 210 tries to duplicate via the learning process. In this example, the training dataset 212 may include input images that include an object (e.g., a street sign). The input images may include various scenarios in which the objects are identified.

The machine-learning algorithm 210 may be operated in a learning mode using the training dataset 212 as input. The machine-learning algorithm 210 may be executed over a number of iterations using the data from the training dataset 212. With each iteration, the machine-learning algorithm 210 may update internal weighting factors based on the achieved results. For example, the machine-learning algorithm 210 can compare output results (e.g., a reconstructed or supplemented image, in the case where image data is the input) with those included in the training dataset 212. Since the training dataset 212 includes the expected results, the machine-learning algorithm 210 can determine when performance is acceptable. After the machine-learning algorithm 210 achieves a predetermined performance level (e.g., 100% agreement with the outcomes associated with the training dataset 212), or convergence, the machine-learning algorithm 210 may be executed using data that is not in the training dataset 212. It should be understood that in this disclosure, "convergence" can mean a set (e.g., predetermined) number of iterations have occurred, or that the residual is sufficiently small (e.g., the change in the approximate probability over iterations is changing by less than a threshold), or other convergence conditions. The trained machine-learning algorithm 210 may be applied to new datasets to generate annotated data.

The machine-learning algorithm 210 may be configured to identify a particular feature in the raw source data 216. The raw source data 216 may include a plurality of instances or input dataset for which supplementation results are desired. For example, the machine-learning algorithm 210 may be configured to identify the presence of a road sign in video images and annotate the occurrences. The machine-learning algorithm 210 may be programmed to process the raw source data 216 to identify the presence of the particular features. The machine-learning algorithm 210 may be configured to identify a feature in the raw source data 216 as a predetermined feature (e.g., road sign). The raw source data 216 may be derived from a variety of sources. For example, the raw source data 216 may be actual input data collected by a machine-learning system. The raw source data 216 may be machine generated for testing the system. As an example, the raw source data 216 may include raw video images from a camera.

In an example, the raw source data 216 may include image data representing an image. Applying the machine-learning algorithms (e.g., deep neural model) described herein, the output can be a quantized version of the input image.

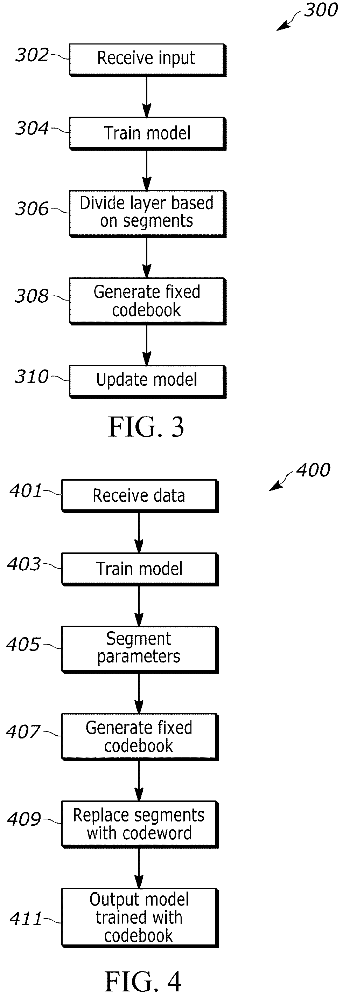

Given the above description of the machine-learning models, along with the structural examples of FIGS. 1-2 configured to carry out the models, FIG. 3 illustrates a flow chart of an example process 300 for generating a vector quantized machine learning model, as described herein. In some implementations, one or more process blocks of the process 300 may be performed by the processor 204.

Given the above description of the machine-learning models, along with the structural examples of FIGS. 1-2 configured to carry out the models, FIG. 3 illustrates a flow chart of an example process 300 for generating a vector quantized machine learning model with a fixed codebook, as described herein. In some implementations, one or more process blocks of the process 300 may be performed by the processor 204.

At 302, the process 300 may receive a training dataset that includes one or more images. In some embodiments, the processor 204 may receive training data as audio files, video files, text files, number files, bitmap image files, vector image files, sensor output signals, and/or any appropriate data object. In some embodiments, the training data may be annotated with one or more labels which describe the training data or some portion of the training data. For example, the training data may be vector images of animals where each image includes a label describing the animal in the image. In some embodiments, the image may have two or more animals in a training image and may proportionally have two or more labels where each label will have a description of the animal as well as a location on the image associated with that animal.

At 304, the process 300 may train a neural model with the training dataset to generate a first layer having weighted parameters. In some embodiments, the processor 204 may train a neural model with the training dataset to identify inputs based on the training. For example, the processor 204 may provide an input of an image without a label to be analyzed by the neural model. In some embodiments, the processor 204 analyzes the input image based on weighted parameters generated during training of the neural model. In some embodiments, the processor 204 may output a resulting identification of the image having a confidence score above a predetermined threshold.

At 306, the process 300 may, during the training phase but after the training data has been analyzed, divide the first layer into a first predetermined number of segments based on the first layer being a first type of layer. For example, the processor 204 may divide the first layer into 8 segments based on the first layer being a linear layer. In some embodiments, the first layer is divided into 8 non overlapping segments where the number of weighted parameters are equally divided among the segments.

The process 300 may be configured to create a codebook, which is a collection of codewords that represent clusters of similar data points. In such an embodiment, the codebook may be a fixed codebook. The process 300 may divide the data space into non-overlapping regions, with each region associated with a specific codeword from the codebook. In some embodiments, during encoding each data vector (e.g., model parameters) may be mapped to the nearest codeword, which may effectively quantizing the data. In some embodiments, during decoding the original data may be reconstructed by using the corresponding codeword from the codebook.

The codebook construction may involve assuming M codewords of size B, where M equals 2 times B. The first B codewords may consist of a single 1 in one bit position, with the remaining bits set to zero. The second set of B codewords mirrors the first set but with -1 instead of 1. For example, for M=8 and B=4, the codebook appears as follows:
|1|0|0|0|
|0|1|0|0|
|0|0|1|0|
|0|0|0|1|
|-1|0|0|0|
|0|-1|0|0|
|0|0|-1|0|
|0|0|0|-1|

In both linear and convolution layers, applying a codeword to a block of the input necessitates B multiplications and B-1 additions. However, in the embodiment disclosed below, as there is only one non-zero entry in the codeword, multiplications and additions are unnecessary. Instead, the system and method may directly pass the corresponding input value for a 1 and negate and pass the input value for a -1.

At 308, the process 300 may generate the fixed codebook by replacing the weighted parameters in each segment of the first layer with a codeword based on finding a representative vector which most closely relates to the weighted parameters of each segment in a vectorization dictionary, where the codebook includes a number of codewords equal to the first predetermined number of segments and each codeword includes the representative vector. For example, the processor 204 may generate a codebook by replacing the weighted parameters in each segment of the first layer with a codeword based on finding a representative vector which most closely relates to the weighted parameters of each segment in a vectorization dictionary, where the vectorization dictionary is a pre-generated table of codewords which correspond with one or more parameters. In some embodiments, the layer may be recreated by reverse lookup of the codewords in the vectorization dictionary and replacing the code words with the weighted parameters.

The process 300 may be configured to introduce vector quantization to deep neural networks by partitioning the parameters of each layer into non-overlapping regions, tailored to the layer type. For 2D convolution layers, the process 300 may divide the weight matrix over the channel input and channel output dimensions. For example, the weight matrix is of shape (Cout, Cin, K, K). The process 300 may divide the weight matrix into Cout * Cin / L regions of size K * K * L.

For example, the process 300 may take linear layers divide the weights into groups of L parameters, where L is a hyperparameter. To maintain compatibility with a single codebook for all linear layers, a value for L is chosen such that all linear layer sizes are divisible by L. For example, L=8 works well for most linear layer sizes. When the weight matrix of a linear layer is of shape (Nin, Nout), the systems and methods described herein divide the weight matrix into Nout * Nin / L partitions of size L.

The process 300 may determine the size of each codebook. For example, E may be used as a hyperparameter to define the number of codewords in each codebook. The hyperparameter may be tuned to optimize the model's performance. Furthermore, E may vary for each type of layer, but the systems and methods described herein may be configured to utilize E=16 which offers excellent results across various use cases.

In a further example of an example embodiments, the first layer may have 512 weighted parameters. In some embodiments, the first layer may be divided by a predetermine number based on the type of layer, such as 8. In some embodiments, dividing the first layer having 512 weighted parameters by 8 may generate 64 segments having 8 weighted parameters each. In some embodiments, the 8 weighted parameters of each segment may be looked up in the vectorization dictionary the nearest codeword to those 8 weighted parameters is used to replace the weighted parameters in that segment. In some embodiments, the first layer having 512 weighted parameters is replaced with a codebook having 64 codewords.

At 310, the process 300 may, in response to updating the neural model with the codebook, output a trained neural model that includes the codebook which replaces the first layer. For example, the processor 204 may output a trained neural model that is smaller from a memory perspective and is operable with less resources from a processing perspective.

Although FIG. 3 shows example blocks of process 300, in some implementations, process 300 may include additional blocks, fewer blocks, different blocks, or differently arranged blocks than those depicted in FIG. 3. Additionally, or alternatively, two or more of the blocks of process 300 may be performed in parallel.

FIG. 4 is a flowchart of an example process 400 for generating a vector quantized machine learning model where multiple layers are replaced with a fixed codebook, as described herein. In some implementations, one or more process blocks of the process 400 may be performed by the processor 204. At step 401, the system may receive a training data set that includes data. The data may be any type of data, such as image data, text information, sound information, radar, LiDar, etc. The training data set may be referred to as the input data in some embodiments.

At step 403, the system may training a neural model of a neural network utilizing the training data set. The system may adjust parameters associated with the various layers of the network based on classifications of the training data set. The training data set may update those parameters until a certain number of iterations has been met or a certain convergence threshold has been achieved.

At 405, the process 400 may segment the one or more parameters associated with each of the one or more deep neural network layers into one or more segments based on a type and a size of each of the one or more deep neural network layers. For example, for a 2D convolution layers, the processor may divide the weight matrix over the channel input and channel output dimensions. In some embodiments, the weight matrix is of shape (Cout, Cin, K, K). In some embodiments, the processor may divide the weight matrix into Cout * Cin / L regions of size K * K * L. This partitioning strategy may be effective for modern deep neural networks, since they frequently utilize 1x1 and 3x3 2D convolution layers.

At step 407, the system and process may generate one or more fixed codebook. The fixed codebook may include a predetermined number of codewords. The codebook may exclusively contains 0s, 1s, and -1s, effectively eliminating floating-point operations. The codebook construction involves assuming M codewords of size B, where M equals 2 times B.

At step 409, the system and process may replace each of the one or more segments with one of the codewords. The system may update the fixed codebook by replacing the weighted parameters in each segment of the second layer with the codeword based on finding the representative vector which most closely relates to the weighted parameters of each segment in the vectorization dictionary.

At step 411, output a trained neural model that utilizes the one or more fixed codebooks. The trained model may be output in response to replacing the one or more segments with the codewords. In one example, the codebook may be used to replaces the first and second layer. For example, the processor 204 may remove the second layer from the neural model since the weight parameters of the second layer have been incorporated into the codebook.

In a further example, the process 400 may take linear layers divide the weights into groups of L parameters, where L is a hyperparameter. To maintain compatibility with a single codebook for all linear layers, a value for L may be chosen such that all linear layer sizes are divisible by L. For example, L=8 works well for most linear layer sizes. When the weight matrix of a linear layer is of shape (Nin, Nout), the processor 204 may divide the weight matrix into Nout * Nin / L partitions of size L.

Although FIG. 4 shows example blocks of process 400, in some implementations, process 400 may include additional blocks, fewer blocks, different blocks, or differently arranged blocks than those depicted in FIG. 4. Additionally, or alternatively, two or more of the blocks of process 400 may be performed in parallel.

In a linear layer, the input may be an image or any other type of input as described. The next layer may be an activation of the previous layer. The input may be multiplied by the entire codebook (the fixed codebook). The result is built from a multiplication look up table. For the lookup table of the index, the index matrix will show the index of the block of the weight matrix will come from each entry of the codebook. Thus the parameters may be derived from an entry in the fixed codebook. Based on the indices and the multiplication table, the system may build the output. The multiplication table will include the entire codebook result by multiplying the input. Each neuron of the network, for each neuron (e.g. 128 neurons) and input of the layer is 64, the first neuron will have 64 inputs, while the 64 inputs will be split into 8 parameters or 8 indexes. The system may multiply the fixed codebook with each input of each layer. The final output may then be sent to the next layer, until the final layer is met. Upon being sent to the last layer, the output of the final layer may indicate a final output. In one embodiment, the network may already be trained when applying the fixed codebook. Once it is trained, the system may efficiently multiply.

In a trained model that utilizes vector quantization, the output at the final layer may depend on the specific application and the architecture of the model. In one example, the final output may be a compressed representation. In vector quantization used for data compression, the final layer might output a sequence of indices corresponding to the codewords in the codebook. Each index may represent the closest codeword to the input vector, effectively encoding the input data in a compressed form.

In another example, reconstructed data may be output. In applications where the goal is to reconstruct the input data from its quantized representation (such as in autoencoders with vector quantization), the final layer might output the reconstructed data. This reconstructed data is obtained by mapping the indices back to their corresponding codewords in the codebook and combining them to form the output.

In yet another example, the final output may include a feature representation. In feature learning or embedding tasks, the final layer might output a feature vector that represents the input data in a new space that may be defined or utilize the codewords. This can be useful for image recognition, where the feature representation can be used for classification or other tasks.

In one example, the final output may be a cluster assignment. In a clustering context (such as k-means clustering), the final layer might output the cluster assignments for each data point. This means each input vector is assigned to the nearest cluster centroid (codeword).

The followings are Pseudocode for sparse vector-quantized linear layer.

**Function** SparseVQLinearLayer(input, index_matrix, Nᵢₙ, Nₒᵤₜ, B):

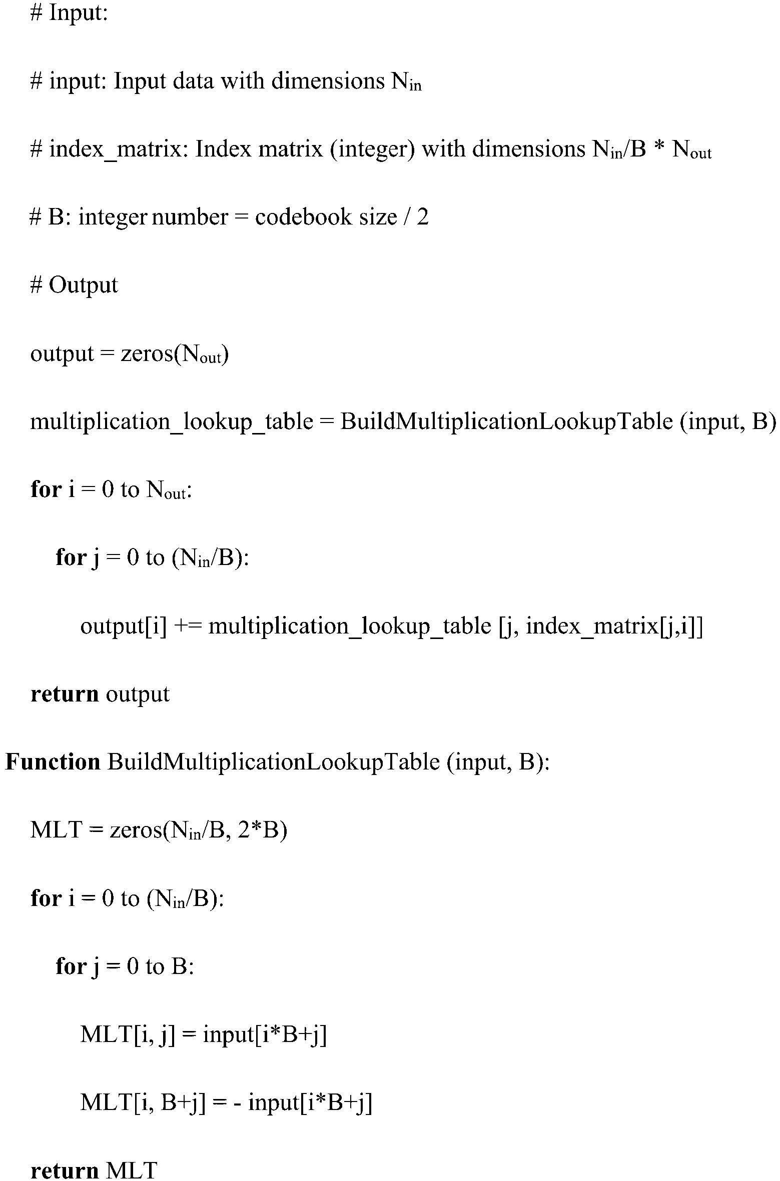

The machine-learning models described herein can be used in many different applications, and not just in the context of road sign image processing. Additional applications where image quantization may be used are shown in FIGS. 6-11. Structure used for training and using the machine-learning models for these applications (and other applications) are exemplified in FIG. 5. FIG. 5 depicts a schematic diagram of an interaction between a computer-controlled machine 500 and a control system 502. Computer-controlled machine 500 includes actuator 504 and sensor 506. Actuator 504 may include one or more actuators and sensor 506 may include one or more sensors. Sensor 506 is configured to sense a condition of computer-controlled machine 500. Sensor 506 may be configured to encode the sensed condition into sensor signals 508 and to transmit sensor signals 508 to control system 502. Non-limiting examples of sensor 506 include video, radar, LiDAR, ultrasonic and motion sensors. In one embodiment, sensor 506 is an optical sensor configured to sense optical images of an environment proximate to computer-controlled machine 500.

Control system 502 is configured to receive sensor signals 508 from computer-controlled machine 500. As set forth below, control system 502 may be further configured to compute actuator control commands 510 depending on the sensor signals and to transmit actuator control commands 510 to actuator 504 of computer-controlled machine 500.

As shown in FIG. 5, control system 502 includes receiving unit 512. Receiving unit 512 may be configured to receive sensor signals 508 from sensor 506 and to transform sensor signals 508 into input signals x. In an alternative embodiment, sensor signals 508 are received directly as input signals x without receiving unit 512. Each input signal x may be a portion of each sensor signal 508. Receiving unit 512 may be configured to process each sensor signal 508 to product each input signal x. Input signal x may include data corresponding to an image recorded by sensor 506.

Control system 502 includes a classifier 514. Classifier 514 may be configured to classify input signals x into one or more labels using a machine learning (ML) algorithm, such as a neural network described above. Classifier 514 is configured to be parametrized by parameters, such as those described above (e.g., parameter θ). Parameters θ may be stored in and provided by non-volatile storage 516. Classifier 514 is configured to determine output signals y from input signals x. Each output signal y includes information that assigns one or more labels to each input signal x. Classifier 514 may transmit output signals y to conversion unit 518. Conversion unit 518 is configured to covert output signals y into actuator control commands 510. Control system 502 is configured to transmit actuator control commands 510 to actuator 504, which is configured to actuate computer-controlled machine 500 in response to actuator control commands 510. In another embodiment, actuator 504 is configured to actuate computer-controlled machine 500 based directly on output signals y.

Upon receipt of actuator control commands 510 by actuator 504, actuator 504 is configured to execute an action corresponding to the related actuator control command 510. Actuator 504 may include a control logic configured to transform actuator control commands 510 into a second actuator control command, which is utilized to control actuator 504. In one or more embodiments, actuator control commands 510 may be utilized to control a display instead of or in addition to an actuator.

In another embodiment, control system 502 includes sensor 506 instead of or in addition to computer-controlled machine 500 including sensor 506. Control system 502 may also include actuator 504 instead of or in addition to computer-controlled machine 500 including actuator 504.

As shown in FIG. 5, control system 502 also includes processor 520 and memory 522 where processor 204 is used interchangeably with processor 520. Processor 520 may include one or more processors. Memory 522 may include one or more memory devices. The classifier 514 (e.g., machine-learning algorithms, such as those described above with regard to pre-trained classifier 306) of one or more embodiments may be implemented by control system 502, which includes non-volatile storage 516, processor 520 and memory 522.

Non-volatile storage 516 may include one or more persistent data storage devices such as a hard drive, optical drive, tape drive, non-volatile solid-state device, cloud storage or any other device capable of persistently storing information. Processor 520 may include one or more devices selected from high-performance computing (HPC) systems including high-performance cores, microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on computer-executable instructions residing in memory 522. Memory 522 may include a single memory device or a number of memory devices including, but not limited to, random access memory (RAM), volatile memory, non-volatile memory, static random access memory (SRAM), dynamic random access memory (DRAM), flash memory, cache memory, or any other device capable of storing information.

Processor 520 may be configured to read into memory 522 and execute computer-executable instructions residing in non-volatile storage 516 and embodying one or more ML algorithms and/or methodologies of one or more embodiments. Non-volatile storage 516 may include one or more operating systems and applications. Non-volatile storage 516 may store compiled and/or interpreted from computer programs created using a variety of programming languages and/or technologies, including, without limitation, and either alone or in combination, Java, C, C++, C#, Objective C, Fortran, Pascal, Java Script, Python, Perl, and PL/SQL.

Upon execution by processor 520, the computer-executable instructions of non-volatile storage 516 may cause control system 502 to implement one or more of the ML algorithms and/or methodologies as disclosed herein. Non-volatile storage 516 may also include ML data (including data parameters) supporting the functions, features, and processes of the one or more embodiments described herein.

The program code embodying the algorithms and/or methodologies described herein is capable of being individually or collectively distributed as a program product in a variety of different forms. The program code may be distributed using a computer readable storage medium having computer readable program instructions thereon for causing a processor to carry out aspects of one or more embodiments. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions, acts, and/or operations specified in the flowcharts or diagrams. In certain alternative embodiments, the functions, acts, and/or operations specified in the flowcharts and diagrams may be re-ordered, processed serially, and/or processed concurrently consistent with one or more embodiments. Moreover, any of the flowcharts and/or diagrams may include more or fewer nodes or blocks than those illustrated consistent with one or more embodiments.

The processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

FIG. 6 depicts a schematic diagram of control system 502 configured to control vehicle 600, which may be an at least partially autonomous vehicle or an at least partially autonomous robot. Vehicle 600 includes actuator 504 and sensor 506. Sensor 506 may include one or more video sensors, cameras, radar sensors, ultrasonic sensors, LiDAR sensors, and/or position sensors (e.g. GPS). One or more of the one or more specific sensors may be integrated into vehicle 600. In the context of sign-recognition and processing as described herein, the sensor 506 is a camera mounted to or integrated into the vehicle 600. Alternatively or in addition to one or more specific sensors identified above, sensor 506 may include a software module configured to, upon execution, determine a state of actuator 504. One non-limiting example of a software module includes a weather information software module configured to determine a present or future state of the weather proximate vehicle 600 or other location.

Classifier 514 of control system 502 of vehicle 600 may be configured to detect objects in the vicinity of vehicle 600 dependent on input signals x. In such an embodiment, output signal y may include information characterizing the vicinity of objects to vehicle 600. Actuator control command 510 may be determined in accordance with this information. The actuator control command 510 may be used to avoid collisions with the detected objects.

In embodiments where vehicle 600 is an at least partially autonomous vehicle, actuator 504 may be embodied in a brake, a propulsion system, an engine, a drivetrain, or a steering of vehicle 600. Actuator control commands 510 may be determined such that actuator 504 is controlled such that vehicle 600 avoids collisions with detected objects. Detected objects may also be classified according to what classifier 514 deems them most likely to be, such as pedestrians or trees. The actuator control commands 510 may be determined depending on the classification. In a scenario where an adversarial attack may occur, the system described above may be further trained to better detect objects or identify a change in lighting conditions or an angle for a sensor or camera on vehicle 600.

In other embodiments where vehicle 600 is an at least partially autonomous robot, vehicle 600 may be a mobile robot that is configured to carry out one or more functions, such as flying, swimming, diving and stepping. The mobile robot may be an at least partially autonomous lawn mower or an at least partially autonomous cleaning robot. In such embodiments, the actuator control command 510 may be determined such that a propulsion unit, steering unit and/or brake unit of the mobile robot may be controlled such that the mobile robot may avoid collisions with identified objects.

In another embodiment, vehicle 600 is an at least partially autonomous robot in the form of a gardening robot. In such embodiment, vehicle 600 may use an optical sensor as sensor 506 to determine a state of plants in an environment proximate vehicle 600. Actuator 504 may be a nozzle configured to spray chemicals. Depending on an identified species and/or an identified state of the plants, actuator control command 510 may be determined to cause actuator 504 to spray the plants with a suitable quantity of suitable chemicals.

Vehicle 600 may be an at least partially autonomous robot in the form of a domestic appliance. Non-limiting examples of domestic appliances include a washing machine, a stove, an oven, a microwave, or a dishwasher. In such a vehicle 600, sensor 506 may be an optical sensor configured to detect a state of an object which is to undergo processing by the household appliance. For example, in the case of the domestic appliance being a washing machine, sensor 506 may detect a state of the laundry inside the washing machine. Actuator control command 510 may be determined based on the detected state of the laundry.

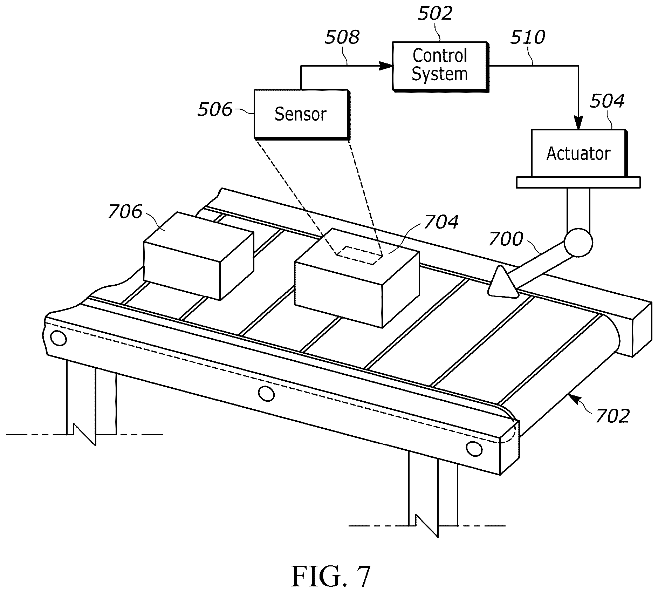

FIG. 7 depicts a schematic diagram of control system 502 configured to control system 700 (e.g., manufacturing machine), such as a punch cutter, a cutter or a gun drill, of manufacturing system 702, such as part of a production line. Control system 502 may be configured to control actuator 504, which is configured to control system 700 (e.g., manufacturing machine).

Sensor 506 of system 700 (e.g., manufacturing machine) may be an optical sensor configured to capture one or more properties of manufactured product 704. Classifier 514 may be configured to determine a state of manufactured product 704 from one or more of the captured properties. Actuator 504 may be configured to control system 700 (e.g., manufacturing machine) depending on the determined state of manufactured product 704 for a subsequent manufacturing step of manufactured product 704. The actuator 504 may be configured to control functions of system 700 (e.g., manufacturing machine) on subsequent manufactured product 106 of system 700 (e.g., manufacturing machine) depending on the determined state of manufactured product 704.

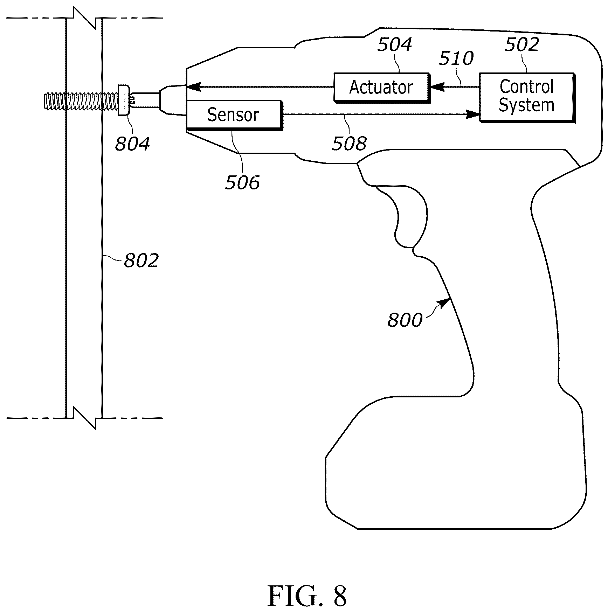

FIG. 8 depicts a schematic diagram of control system 502 configured to control power tool 800, such as a power drill or driver, that has an at least partially autonomous mode. Control system 502 may be configured to control actuator 504, which is configured to control power tool 800.

Sensor 506 of power tool 800 may be an optical sensor configured to capture one or more properties of work surface 802 and/or fastener 804 being driven into work surface 802. Classifier 514 may be configured to determine a state of work surface 802 and/or fastener 804 relative to work surface 802 from one or more of the captured properties. The state may be fastener 804 being flush with work surface 802. The state may alternatively be hardness of work surface 802. Actuator 504 may be configured to control power tool 800 such that the driving function of power tool 800 is adjusted depending on the determined state of fastener 804 relative to work surface 802 or one or more captured properties of work surface 802. For example, actuator 504 may discontinue the driving function if the state of fastener 804 is flush relative to work surface 802. As another non-limiting example, actuator 504 may apply additional or less torque depending on the hardness of work surface 802.

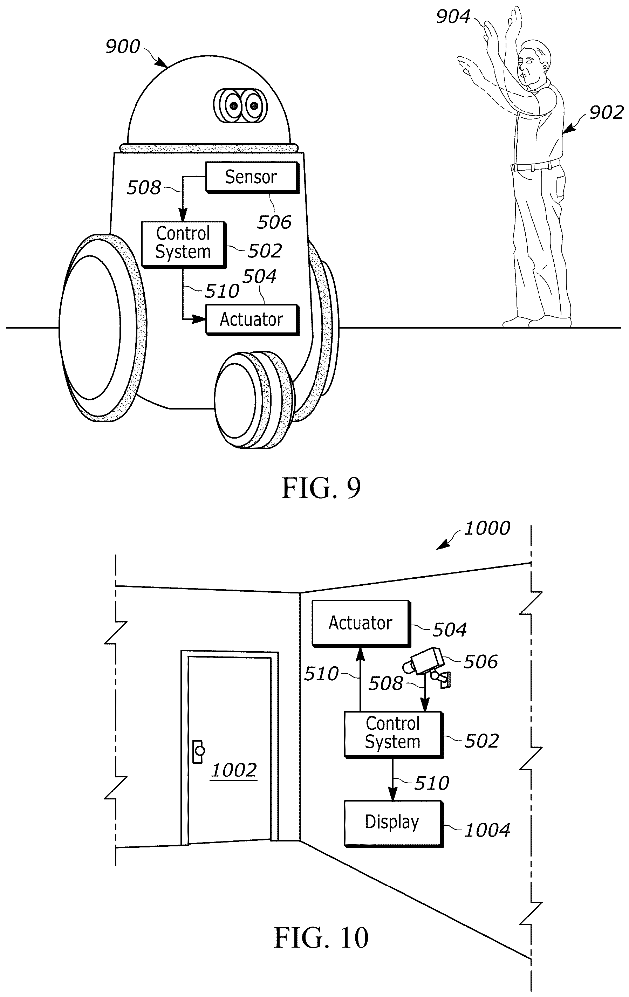

FIG. 9 depicts a schematic diagram of control system 502 configured to control automated personal assistant 900. Control system 502 may be configured to control actuator 504, which is configured to control automated personal assistant 900. Automated personal assistant 900 may be configured to control a domestic appliance, such as a washing machine, a stove, an oven, a microwave or a dishwasher.

Sensor 506 may be an optical sensor and/or an audio sensor. The optical sensor may be configured to receive video images of gestures 904 of user 902. The audio sensor may be configured to receive a voice command of user 902.

Control system 502 of automated personal assistant 900 may be configured to determine actuator control commands 510 configured to control system 502. Control system 502 may be configured to determine actuator control commands 510 in accordance with sensor signals 508 of sensor 506. Automated personal assistant 900 is configured to transmit sensor signals 508 to control system 502. Classifier 514 of control system 502 may be configured to execute a gesture recognition algorithm to identify gesture 904 made by user 902, to determine actuator control commands 510, and to transmit the actuator control commands 510 to actuator 504. Classifier 514 may be configured to retrieve information from non-volatile storage in response to gesture 904 and to output the retrieved information in a form suitable for reception by user 902.

FIG. 10 depicts a schematic diagram of control system 502 configured to control monitoring system 1000. Monitoring system 1000 may be configured to physically control access through door 1002. Sensor 506 may be configured to detect a scene that is relevant in deciding whether access is granted. Sensor 506 may be an optical sensor configured to generate and transmit image and/or video data. Such data may be used by control system 502 to detect a person's face.

Classifier 514 of control system 502 of monitoring system 1000 may be configured to interpret the image and/or video data by matching identities of known people stored in non-volatile storage 516, thereby determining an identity of a person. Classifier 514 may be configured to generate and an actuator control command 510 in response to the interpretation of the image and/or video data. Control system 502 is configured to transmit the actuator control command 510 to actuator 504. In this embodiment, actuator 504 may be configured to lock or unlock door 1002 in response to the actuator control command 510. In other embodiments, a non-physical, logical access control is also possible.

Monitoring system 1000 may also be a surveillance system. In such an embodiment, sensor 506 may be an optical sensor configured to detect a scene that is under surveillance and control system 502 is configured to control display 1004. Classifier 514 is configured to determine a classification of a scene, e.g. whether the scene detected by sensor 506 is suspicious. Control system 502 is configured to transmit an actuator control command 510 to display 1004 in response to the classification. Display 1004 may be configured to adjust the displayed content in response to the actuator control command 510. For instance, display 1004 may highlight an object that is deemed suspicious by classifier 514.

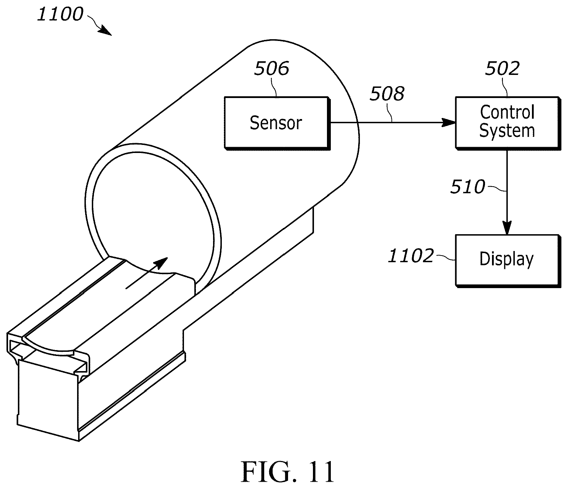

FIG. 11 depicts a schematic diagram of control system 502 configured to control imaging system 1100, for example an MRI apparatus, x-ray imaging apparatus or ultrasonic apparatus. Sensor 506 may, for example, be an imaging sensor. Classifier 514 may be configured to determine a classification of all or part of the sensed image. Classifier 514 may be configured to determine or select an actuator control command 510 in response to the classification obtained by the trained neural network. For example, classifier 514 may interpret a region of a sensed image to be potentially anomalous. In this case, actuator control command 510 may be determined or selected to cause display 1102 to display the imaging and highlighting the potentially anomalous region.

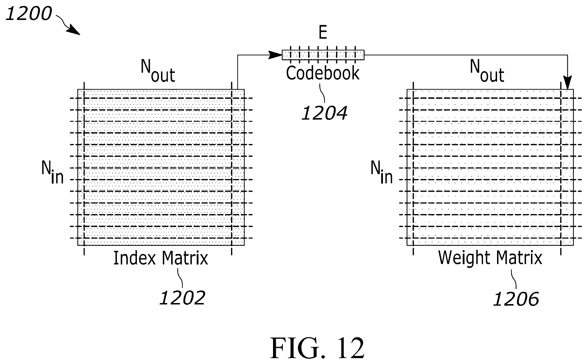

FIG. 12 depicts a diagram 1200 of a vector quantized linear system, in accordance with the present disclosure. In some embodiments, the diagram 1200 includes an index matrix 1202 may include the model parameters of the neural model. The index matrix 1202 may work in conjunction with codebook 1204 where the codebook has E entries, each of size 1. The index matrix 1202 works in conjunction with the codebook 1204 to produce the intermediate results in weight matrix 1206. Each parameter in the weight matrix 1206 is an entry in the codebook 1204. Once weight matrix 1206 is generated based on index matrix 1202 and codebook 1204, the weight matrix 1206 can function as a normal linear layer in the neural model.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

## Claims

1. A method for generating vector-quantized deep neural networks, the method comprising:
receiving a training dataset that includes one or more image, text information, sound information;
training a neural model with the training dataset to adjust one or more parameters associated with one or more deep neural network layers;
segmenting the one or more parameters associated with each of the one or more deep neural network layers into one or more segments based on a type and a size of each of the one or more deep neural network layers;
generating one or more fixed codebook, wherein the fixed codebook include a predetermined number of codewords;
replacing each of the one or more segments with one of the codewords; and
in response to replacing the one or more segments with one of the codewords, outputting a trained neural model that utilizes the one or more fixed codebooks.

2. The method of claim 1, wherein the predetermined number of codewords is equal to double a size of the codewords.

3. The method of claim 1, wherein the predetermined number of codewords is always an even number.

4. The method of claim 1, wherein the one or more deep neural network layers is either a linear layer or convolutional layer.

5. The method of claim 1, wherein the method includes multiplying, for each neuron of a first type of layer, the fixed codebook with the input.

6. The method of claim 1, wherein the method includes eliminating floating-point multiplications and floating-point additions.

7. The method of claim 1, wherein the one or more codewords are equal to three values being either 0, 1 or -1.

8. The method of claim 1, wherein the one or more images are at least one of: numbers, text, audio, vector image, bitmap image, and sensor signal.

9. A device for generating vector-quantized deep neural networks comprising one or more processors configured to:
receive a training dataset that includes one or more images;
training a neural model with the training dataset to generate a first layer having weighted parameters;
segmenting the one or more parameters associated with each of the one or more deep neural network layers one or more segments based on a type and a size of each of the one or more deep neural network layers;
generating one or more fixed codebook, wherein the fixed codebook include a predetermined number of codewords;
replacing each of the one or more segments with one of the codewords; and
in response to replacing the one or more segments with one of the codewords, outputting a trained neural model that utilizes the one or more fixed codebooks.

10. The device of claim 9, wherein the fixed codebook is applied to the input at each layer of the neural model.

11. The device of claim 9, wherein the one or more processors are further configured to, at the trained neural model, output a final value at a final layer in response to applying a multiplication of the fixed codebook and input at one or more layers of the trained neural model.

12. The device of claim 9, wherein the number of codewords is equal to double a size of the codewords.

13. The device of claim 9, wherein the number of codewords is always an even number.

14. The device of claim 9, wherein the first layer is either a linear layer or convolutional layer.

15. The device of claim 9, wherein the fixed codebook includes only one non-zero entry in the codewords.

16. The device of claim 9, wherein the method includes utilizing a multiplication look-up table as applied to the input data.

17. The device of claim 9, wherein the first type of the first layer can be at least one of: a linear layer, a 1x1 convolution layer, and a 3x3 convolution layer.

18. A system for generating vector-quantized deep neural networks comprising one or more processors configured to:
receive a training dataset that includes one or more images;
training a neural model with the training dataset to generate a first layer having weighted parameters;
segmenting the one or more parameters associated with each of the one or more deep neural network layers one or more segments based on a type and a size of each of the one or more deep neural network layers;
generating one or more fixed codebook, wherein the fixed codebook include a predetermined number of codewords;
replacing each of the one or more segments with one of the codewords; and
in response to replacing the one or more segments with one of the codewords, outputting a trained neural model that utilizes the one or more fixed codebooks.

19. The system of claim 18, wherein the codebook includes a first set of codewords and a second set of codewords, wherein the second set of codewords mirrors the first set of codewords except for utilizing a -1 value instead of a 1 value.

20. The system of claim 18, wherein, after training and vectorization, the neural model is utilized by at least one of a mobile device, an internet of things device, a wearable device.
